# EUROPEAN PATENT SPECIFICATION

(11) **EP 0 358 307 B1**
(45) Date of publication and mention of the grant of the patent: **22.09.1993**
(21) Application number: 89306481.6
(22) Date of filing: 26.06.1989
(51) Int. Cl.: F16L 11/08, F16L 11/127

(54) **Foamed tubing**
Schaumstoffrohr
Tuyau en mousse

(30) Priority: 08.09.1988 US 244319
(43) Date of publication of application: 14.03.1990
(73) Proprietor: TELEFLEX INCORPORATED, Limerick Pennsylvania 19468 (US)
(72) Inventor: Martucci, Norman S., Birmingham Michigan 48009 (US)
(74) Representative: Walters, Frederick James

(56) References cited:
- DE-A- 1 264 895
- DE-A- 2 217 617
- GB-A- 1 175 042
- GB-A- 2 008 223
- GB-A- 2 062 161
- US-A- 4 059 847
- DATABASE WPIL, no. 86-208421, Derwent Publications Ltd, London, GB; & JP-A-61 140 692 (TOKAI RUBBER IND. K.K.) 27-06-1986

## Description

### TECHNICAL FIELD

This invention relates to a hose construction. Specifically, the invention relates to a hose assembly adapted for carrying vehicle fuels.

### BACKGROUND ART

Hose assemblies used to carry fuels are well known in the art. The hose should preferably be strong and resistant to heat and chemical degradation. These hoses are subject chemical breakdown by the various fluids which flow through them. Further, these hoses are typically routed through the engine compartment of the vehicle to deliver fuel to the engines. These engines are hot and thus, the hoses used to carry fuel are subject to breakdown from the heat.

TEFLON hoses provide the necessary physical properties for carrying fuels. A problem with these types of hoses is that when used alone, i.e., only TEFLON, they tend to get bent during installation and they kink. This kink remains permanent and provides resistance to fluid flow through the hose. To solve this problem, one known hose assembly includes an inner TEFLON tubular member. The inner tubular member is surrounded by a tightly wound metallic braid. The metallic braid allows the teflon inner tubular member to bend to a certain degree without kinking. However, if bent past a certain point the metallic braid aids in the kinking of the inner tubular member. This assembly, however, has three major disadvantages. First, the metallic braid tends to abrade the exterior of the inner tubular member. This causes leaks from the inner tubular member. The second problem is that the exterior metallic braided casing is thermally and electrically conductive. More important is that the metallic braid will retain heat and transfer the heat to the fuel moving through the inner tubular member causing fuel system problems. Finally, if used in an automotive environment, the metallic braid transmits noise during operation of the vehicle which is undesirable.

British Patent 1,175,042 discloses a plastics pipe assembly having a corrugated inner liner of, for example, polytetrafluoroethylene and a cover of fluoroethylene propylene which is extruded onto the inner liner, and the assembly includes a reinforcing layer to form a solid structure similar to that of the above described TEFLON hoses.

United States Patent Number 3,547,162 to Schuerer issued December 15, 1970 discloses a plastic pipe assembly. The assembly includes an inner liner of a synthetic plastic made from cross linked olefinic polymers. A fiber braided layer is disposed over the inner liner. Finally, a foamed layer of synthetic plastic is disposed about the synthetic fiber reinforcement. By utilizing cross linked olefinic polymers, the system is deficient in that it cannot be used to carry vehicle fuels, as such fuels would degrade the inner liner.

### SUMMARY OF INVENTION AND ADVANTAGES

According to the present invention there is provided a hose assembly comprising a tubular member and coupling means for connecting the ends of the tubular member to fittings for conducting fluid therethrough; the tubular member having an inner fluorocarbon polymeric liner and an outer fluorocarbon polymeric layer CHARACTERISED IN THAT the outer fluorocarbon polymeric layer is of cellular form providing completely closed cells containing filler material, said outer layer being around the exterior of the inner liner and providing hoop strength about the inner liner to prevent kinking of the inner liner.

Accordingly, there is provided a hose which includes an outer layer having a closed cell structure over an inner tubular member, both the outer layer and the inner member comprising a fluorocarbon polymer and the outer layer providing strength so that the inner tubular member does not kink upon bending. By using a foam outer layer, the weight and cost of the hose is substantially reduced. Further, the assembly is resistant to both heat and chemical degradation which makes it suitable for use in automotive environments for carrying fuels. Finally, the assembly is not thermally conductive. Thus heat from the exterior of the hose will not be transmitted to the fuel through the hose assembly.

### FIGURES IN THE DRAWINGS

Other advantages of the present invention will be readily appreciated as the same becomes better understood by reference to the following detailed description when considered in connection with the accompanying drawings wherein:
Figure 1 is a perspective view of the preferred embodiment of the instant invention;
Figure 2 is a perspective view of an alternative embodiment of the instant invention;
Figure 3 is a perspective view of a second alternative embodiment of the instant invention;
Figure 4 is a side view partially broken away of the preferred embodiment of the instant invention including a coupling member; and
Figure 5 is a side view partially broken away of the preferred embodiment of the instant invention including an alternative coupling member.

### DETAILED DESCRIPTION OF THE DRAWINGS

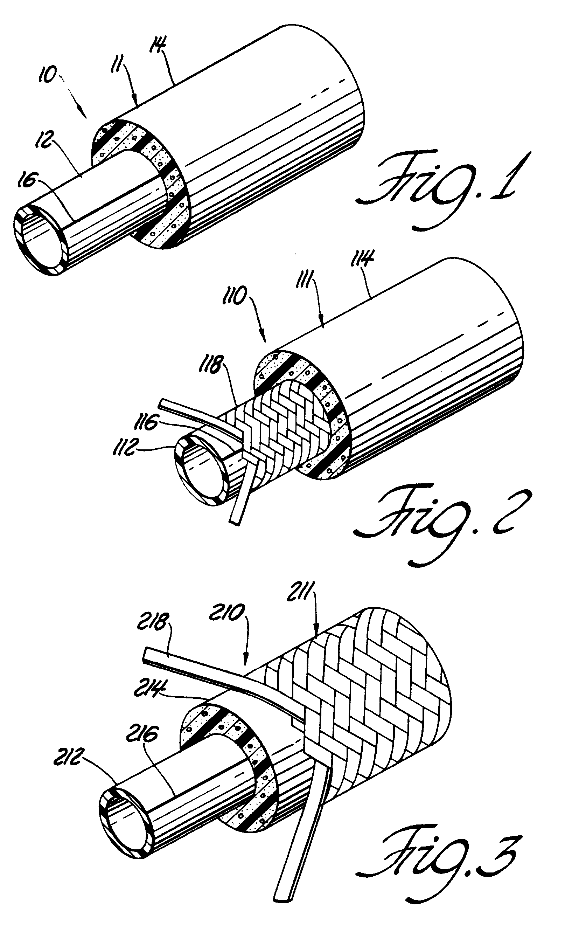

A hose assembly made in accordance with the instant invention is generally shown at 10 in Figure 1. The assembly 10 includes a tubular member, generally indicated at 11, and a coupling means, generally indicated at 20, for connecting the ends of the tubular member 11 to fittings for conducting fluid therethrough.

The tubular member 11 includes an inner organic polymeric liner 12. The liner 12 is preferably extruded and has a wall thickness of between .003 and .012 inches. The inner liner 12 is made of a fluorocarbon polymer. Specifically, the inner liner is made of the polymer of tetrafluoroethylene (PTFE), the polymer of fluorinated ethylene propylene (FEP), the polymer of perfluoroalkoxy resin (PFA), or the polymer of ethelyne-tetrafluoroethylene (ETFE). The fluorocarbon polymers PTFE, FEP, PFA are sold under the trademark TEFLON by Dupont. The polymer ETFE is sold under the trademark TEFZEL by Dupont.

The inner liner 12 is impervious to fluid flow through the wall. Since the inner liner is made of a fluorocarbon polymer material, it is resistant to heat and chemical degradation. This allows a variety of fluids to pass through the interior of the liner 12 without corroding the liner 12.

The tubular member 11 further includes an outer organic polymeric layer 14. The outer layer 14 preferably has a wall thickness of between .010 inches and .030 inches. The outer layer 14 also comprises a fluorocarbon polymer. Specifically, the outer layer 14 comprises the polymer of tetrafluoroethylene (PTFE), fluorinated ethylene propylene (FEP), the polymer of perfluoroalkoxy resin (PFA), or the polymer of ethylene-tetrafluoroethylene (ETFE).

The outer layer 14 contains a plurality of voids. The voids reduce the weight and cost of the assembly 10. The voids of the outer layer 14 comprise less than 50 percent of the total volume of the outer layer 14. The voids are completely enclosed. This prevents fluid flow through the wall. The voids are filled with a filler material. The preferred filler material is gas, as will be described subsequently. It will be appreciated that any other suitable filler material, such as glass beads, may be utilized. The filler material should be inexpensive and light weight.

The outer layer 14 is preferably a cellular foam. Specifically, the outer layer is made of closed cell foam and is impervious to fluid flow through the wall. The foam is formed by utilizing a compressed gas such as freon or nitrogen to fill the voids. Preferably, the foam has a cell space which is less than 50 percent of the total volume of foam layer. Specifically, the cell space of the foamed layer 14 is between 30 and 50 percent of the total volume of the foamed layer. In other words, the cell space, i.e., void content, is between 30 and 50 percent of the total volume of the outer layer 14. The outer layer 14 is preferably formed by extruding the fluorocarbon polymer foam about and into contact with the exterior of the inner liner 12 as shown in Figure 1. That is, the inner liner 12 is used as a mandrel in the extrusion of the outer foam layer 14.

Both the inner liner 12 and outer layer 14 are fluorocarbon polymers. It is, however, not necessary that both the inner liner 12 and outer layer 14 be of the same fluorocarbon polymer, although they may be. For example, the inner liner 12 may be made of PFA while the outer foam layer 14 be of PTFE. Any combination of the fluorocarbon polymers listed may be utilized for the inner liner 12 and outer layer 14.

Utilizing a fluorocarbon polymer having a plurality of voids for the outer layer 14, the tubular member 11 is resistant to heat transfer. That is, as fluid flows through the inner liner 12, heat from the exterior of the tubular member 11 such as that from the engine is not likely to be transferred to the fluid flowing through the inner liner 12. Further, the weight of the assembly is reduced.

The outer layer 14 allows the inner liner 12 to be bent without kinking. That is, the outer layer 14 provides strength to the inner liner 12 upon bending. This is called hoop strength. Thus, by using a foam outer layer 14, the hoop strength of the tubular member 11 is increased, so that the tubular member 11 can be bent without kinking the inner liner 12. Further, the foam outer layer 14 adds to the working pressure of the hose. That is, the foam 14 provides strength and allows the inner liner 12 to accommodate a fluid under pressure.

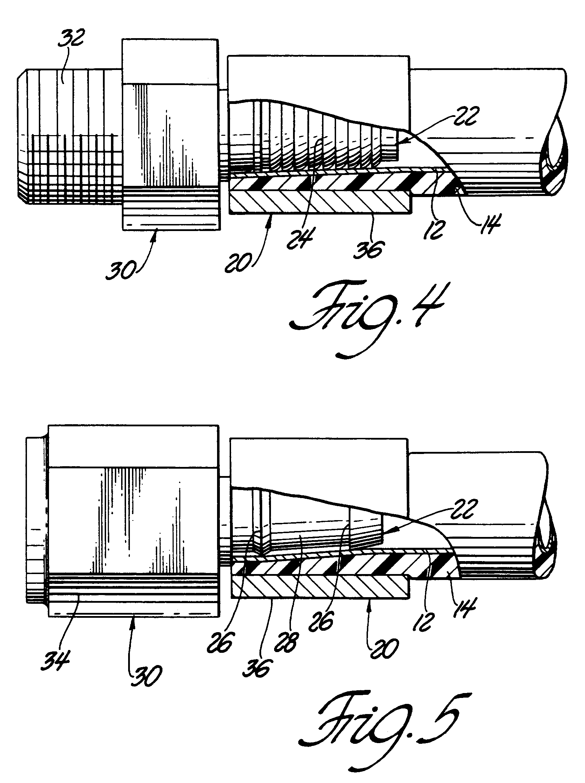

The assembly 10 further includes coupling means 20. The coupling means 20 is for connecting the assembly 10 to a fitting (not shown). The fitting is adapted to cooperate with the coupling means 20. Specifically, the coupling means 20 comprises a coupling assembly 20. The coupling assembly 20 includes an insert portion, generally indicated at 22 for inserting into and engaging the interior inner liner 12. The insert portion 22 may have a plurality of barbs 24 for engaging the interior of the insert portion (as best viewed in Figure 4). Alternatively, the insert portion may have a pair of annular ridges 26, and a smooth portion 28 therebetween (as best viewed in Figure 5). The coupling assembly 20 further includes an engaging portion generally indicated at 30 extending longitudinally from the insert portion. The engaging portion is for engaging a fitting adapted to cooperate therewith. The engaging portion 30 may comprise a male threaded member 32 or a female threaded member 34. The engaging portion 30 may also comprise any configuration adapted to cooperate with a member to which it will be fixed. For example, the engaging portion 30 may comprise a socket to receive a mating ball joint. Finally, the coupling assembly 20 includes a locking collar 36. The locking collar 36 is disposed about the exterior of the outer layer 14 and is slid over the insert portion 22 of the coupling member 20. In this manner, the inner liner 12 is forced into tight frictional engagement with the insert portion to prevent relative axial movement between the inner liner 12 and insert portion 22. Alternatively, the coupling assembly 20 may be of an organic polymeric material and may be molded about the tubular member 11 for a mechanical connection or fusion bond.

As fluid flows through the inner liner 12, electrical charges tend to build throughout the length of the inner liner 12. In order to prevent these electrical charges from accumulating, the inner liner 12 has an integral longitudinal conductive means coextensive with the length of the inner liner 12 for conducting an electrical charge through the liner. Preferably, the inner liner 12 has a conductive strip of carbon black. This carbon black is electrically conductive and will dissipate any electrical charges built up by the fluid. Alternatively, the whole inner tubular member 12 can comprise the conductive means. This is done by using carbon black about the entire inner liner 12. The outer foam layer 14 is, however, electrically non-conductive. This is important in that electrical changes applied to the exterior of the outer layer 14 will not be conducted throughout the length of the tubular member 11 or to the fluid passing through the interior of the inner liner 12. It will be appreciated that other conductive material may be used to form the conductive strip 16.

Figure 2 shows an alternative embodiment of the instant invention. Like numerals are used to represent like parts and are offset by 100. The alternative hose assembly is generally shown at 110 and includes a tubular member 111. The assembly 210 further includes coupling means 20. The coupling means is as previously described.

The tubular member 111 includes an inner organic polymeric liner 112. The inner organic polymeric liner 112 is a fluorocarbon polymer as in the first embodiment. Specifically, the inner liner 112 comprises either the polymer of tetrafluoroethylene (PTFE), fluorinated ethylene propylene (FEP), perfluoroalkoxy (PFA), or ethelynetetrafluorethylene (ETFE). Further, the tubular member 211 includes an outer organic polymeric layer 114. The outer layer 114 comprises a fluorocarbon polymer as in the first embodiment. The fluorocarbon polymer used is the polymer of tetrafluoroethylene (PTFE), fluorinated ethylene propylene (FEP), perfluoroalkoxy (PFA), or ethelyne-tetrafluorethylene (ETFE).

The assembly 110 further includes a braided layer 118 between the inner liner 112 and the outer layer 114. The braided layer 118 comprises a fabric braid. The fabric braid can be comprised of any nonmetallic material. Preferably, the fabric used for the braided layer 118 is glass fiber. The braided fibers may be wound with spaces. This wound braided layer 118 adds to the strength of the inner liner 112. When the braided layer 118 is disposed between the inner liner 112 and outer layer 114, the fibers of the braided layer 118 may be loosely braided so that there are gaps between adjacent braids. Specifically, by using a braided layer 118, a higher pressure fluid can flow through the inner liner 112. Further, the braided layer 118 aids in the tensile strength of the hose assembly 110. Specifically, in certain instances fittings need to be disposed on the ends of the assembly 110. By putting a braided layer 118, the tensile strength of the assembly 110 is increased sufficiently to utilize any type of end fitting (not shown).

Further, the assembly 110 includes a conductive means 116. As in the first embodiment, the conductive means comprises a strip of carbon black. Alternatively, the conductive means may comprise a blackening of the entire inner member 112.

A second alternative embodiment of the instant invention is generally shown at 210 in Figure 3. The assembly 210 includes a tubular member generally indicated at 211. The assembly includes a coupling member 20 as previously described with one modification as will be described subsequently
The tubular member 211 includes an inner liner 212 of a fluorocarbon polymer as in the first embodiment. Specifically, the inner liner 212 comprises the polymer of tetrafluoroethylene, fluorinated ethylene propylene, perfluoroalkoxy, or ethelyne-tetrafluorethylene. Further, the tubular member 211 includes an outer organic layer comprising cellular foam of fluorocarbon polymeric material. The material to form the outer layer 214 is the polymer of tetrafluoroethylene, fluorinated ethylene propylene, perfluoroalkoxy or ethelyne-tetrafluorethylene.

The assembly further includes a conductive means 216 for dissipating electrical charges in the inner liner 212. The conductive means comprises a strip 216 of carbon black. Alternatively, the conductive means may comprise blackening the entire inner member 212.

The assembly 210 includes a braided layer 218 about the exterior of the outer layer 214. The braided layer 218 preferably comprises a tightly wound fabric braid as in the second embodiment. Specifically, the braids of the layer 218 are in close proximity such that there is no gap between adjacent braids. The tightly wound braided layer 218 adds to the strength of the assembly 210. As in the previous embodiment, the fibers of the braided layer 218 may be loosely wound in some instances. Because the braided layer 218 is disposed about the exterior of the outer layer 214, the locking collar 36 of the coupling means 20 is disposed about the braided layer 218 rather than directly about the outer layer 214.

## Claims

1. A hose assembly (10, 110, 210) comprising a tubular member (11, 111, 211) and coupling means (20) for connecting the ends of the tubular member to fittings for conducting fluid therethrough; the tubular member (11, 111, 211) having an inner flurocarbon polymeric liner (12, 112, 212) and an outer flurocarbon polymeric layer (14, 114, 214) CHARACTERISED IN THAT the outer flurocarbon polymeric layer (14, 114, 214) is of cellular form providing completely closed cells containing filler material, said outer layer being around the exterior of the inner liner and providing hoop strength about the inner liner (12, 112, 212) to prevent kinking of the inner liner.

2. An assembly according to claim 1 characterised in that said inner liner (12, 112, 212) has an integral longitudinal conductive means (16, 116, 216) coextensive with the length of said inner liner (12, 112, 212) for conducting electrical charge through said inner liner (12, 112, 212).

3. An assembly according to either claim 1 or claim 2 characterised in that the closed cells of the outer layer (14, 114, 214) comprise less than 50% of the total volume of said outer layer (14, 114, 214).

4. An assembly according to any one of the preceding claims characterised in that the filler material comprises a gas whereby the outer layer is of foamed structure.

5. An assembly according to any one of the preceding claims characterised in that the filler material comprises glass beads.

6. An assembly according to any one of the preceding claims characterised in that a non-metallic braided layer (118) having spaces or gaps in the braiding thereof is included between said inner liner (112) and said outer layer (114).

7. An assembly according to any one of the preceding claims characterised in that a non-metallic braided layer (218) is provided over said outer layer (214).

8. An assembly according to either claim 6 or claim 7 characterised in that said braided layer (118, 218) comprises fabric braid or glass fibre.

9. An assembly according to claim 2 or any one of claims 3 to 8 when appendant to claim 2 characterised in that said conductive means (16, 116, 216) comprises carbon black.

10. An assembly according to any one of the preceding claims characterised in that said flurocarbon polymer comprises the polymer of tetrafluoroethylene, fluorinated ethylene propylene, perfluoroalkoxy or ethelynetetrafluorethylene.

11. An assembly according to any one of the preceding claims characterised in that said coupling means (20) comprises an insert portion (22) for engaging the interior of said inner liner (12, 112, 212); and an engaging portion (30) extending longitudinally from said insert portion (20) for engaging a fitting.

12. An assembly according to claim 11 characterised in that said coupling means (20) comprises a locking collar disposed about the exterior of said outer layer (14, 114, 214) for forcing said inner layer (12, 112, 212) into engagement with said insert (22) portion and preventing relative axial movement therebetween.

## Patentansprüche

1. Schlauchaufbau (10, 110, 210) mit einem rohrförmigen Teil (11, 111, 211) und einer Kupplungseinrichtung (20) für ein verbinden der Enden des rohrformigen Teils mit Anschlußstücken zum Hindurchleiten eines Fluids; wobei das rohrförmige Teil (11, 111, 211) eine innere polymere Fluorkohlenstoff-Auskleidung (12, 112, 212) und eine äußere polymere Fluorkohlenstoffschicht (14, 114, 214) hat, dadurch gekennzeichnet, daß die äußere polymere Fluorkohlenstoffschicht (14, 114, 214) eine zellulare Ausbildung aufweist, welche vollständig geschlossene, ein Füllmaterial enthaltende Zellen ergibt, wobei die äußere Schicht die Außenseite der inneren Auskleidung umgibt und eine Umfangsfestigkeit für die innere Auskleidung (12, 112, 212) ergibt, um eine Knickung der inneren Auskleidung zu verhindern.

2. Aufbau nach Anspruch 1, dadurch gekennzeichnet, daß die innere Auskleidung (12, 112, 212) eine integrierte längsverlaufende leitfähige Einrichtung (16, 116, 216) hat, die sich gemeinsam mit der Länge der inneren Auskleidung (12, 112, 212) erstreckt, um durch die Auskleidung (12, 112, 212) eine elektrische Belastung zu leiten.

3. Aufbau nach Anspruch 1 oder Anspruch 2, dadurch gekennzeichnet, daß die geschlossenen Zellen der äußeren Schicht (14, 114, 214) weniger als 50 % des gesamten Volumens der äußeren Schicht (14, 114, 214) umfassen.

4. Aufbau nach einem der vorhergehenden Ansprüche, dadurch gekennzeichnet, daß das Füllermaterial ein Gas umfaßt, wodurch die äußere Schicht eine geschäumte Struktur aufweist.

5. Aufbau nach einem der vorhergehenden Ansprüche, dadurch gekennzeichnet, daß das Füllermaterial Glasperlen umfaßt.

6. Aufbau nach einem der vorhergehenden Ansprüche, dadurch gekennzeichnet, daß eine nichtmetallische geflochtene Schicht (118), die Zwischenräume oder Spalte in ihrer Beflechtung aufweist, zwischen die innere Auskleidung (112) und die äußere Schicht (114) eingeschlossen ist.

7. Aufbau nach einem der vorhergehenden Ansprüche, dadurch gekennzeichnet, daß eine nichtmetallische geflochtene Schicht (218) über der äußeren Schicht (214) vorgesehen ist.

8. Aufbau nach Anspruch 6 oder Anspruch 7, dadurch gekennzeichnet, daß die geflochtene Schicht (118, 218) eine Gewebeflechte oder Glasfaser umfaßt.

9. Aufbau nach Anspruch 2 oder einem der Ansprüche 3 bis 8 in der Rückbeziehung auf Anspruch 2, dadurch gekennzeichnet, daß die leitfähige Einrichtung (16, 116, 216) Ruß umfaßt.

10. Aufbau nach einem der vorhergehenden Ansprüche, dadurch gekennzeichnet, daß der polymere Fluorkohlenstoff das Polymer von Tetrafluoräthylen, fluoriertes Äthylenpropylen, Perfluoralkoxy oder Äthylentetrafluoräthylen umfaßt.

11. Aufbau nach einem der vorhergehenden Ansprüche, dadurch gekennzeichnet, daß die Kupplungseinrichtung (20) einen Einsatzteil (22) für einen Eingriff mit der Innenseite der inneren Auskleidung (12, 112, 212) aufweist; und einen Eingriffsteil (30), der in Längsrichtung von dem Einsatzteil (20) für einen Eingriff mit einem Anschlußstück verläuft.

12. Aufbau nach Anspruch 11, dadurch gekennzeichnet, daß die Kupplungseinrichtung (20) eine Sicherungshülse aufweist, die an der Außenseite der äußeren Schicht (14, 114, 214) angeordnet ist, um die innere Schicht (12, 112, 212) in einen Eingriff mit dem Einsatzteil (22) zu zwingen und zwischen beiden eine relative axiale Bewegung zu verhindern.

## Revendications

1. Dispositif de tuyau (10, 110, 210) comprenant un élément tubulaire (11, 111, 211) et des moyens d'accouplement (20) destinés à relier les extrémités de l'élément tubulaire à des raccords pour conduire un fluide à travers celui-ci, l'élément tubulaire (11, 111, 211) comportant un fourreau intérieur en polymère de fluorocarbone (12, 112, 212) et une couche extérieure en polymère de fluorocarbone (14, 114, 214) ; dispositif caractérisé en ce que la couche extérieure en polymère de fluorocarbone (14, 114, 214) est de forme cellulaire pour fournir des cellules complètement fermées contenant un matériau de remplissage, cette couche extérieure étant disposée autour de l'extérieur du fourreau intérieur et donnant une résistance à la torsion en cercle autour du fourreau intérieur (12, 112, 212) pour empêcher le vrillage du fourreau intérieur.

2. Dispositif selon la revendication 1, caractérisé en ce que le fourreau intérieur (12, 112, 212) comporte des moyens conducteurs longitudinaux (16, 116, 216) faisant corps avec celui-ci et s'étendant sur toute la longueur du fourreau intérieur (12, 112, 212) pour conduire des charges électriques dans ce fourreau intérieur (12, 112, 212).

3. Dispositif selon l'une quelconque des revendications 1 ou 2, caractérisé en ce que les cellules fermées de la couche extérieure (14, 114, 214) constituent moins de 50 % du volume total de la couche extérieure (14, 114, 214)

4. Dispositif selon l'une quelconque des revendications précédentes, caractérisé en ce que le matériau de remplissage est constitué par un gaz de façon que la couche extérieure forme une structure de mousse.

5. Dispositif selon l'une quelconque des revendications précédentes, caractérisé en ce que le matériau de remplissage est constitué par des perles de verre.

6. Dispositif selon l'une quelconque des revendications précédentes, caractérisé en ce qu'une couche non-métallique tressée (118) comportant des espaces ou des intervalles dans sa tresse, est placée entre le fourreau intérieur 112 et la couche extérieure (114)

7. Dispositif selon l'une quelconque des revendications précédentes, caractérisé en ce qu'une couche non-métallique tressée (218) est formée sur la couche extérieure (214).

8. Dispositif selon l'une quelconque des revendications 6 ou 7, caractérisé en ce que la couche tressée (118, 218) est constituée par une tresse de tissu ou de fibres de verre.

9. Dispositif selon la revendication 2 ou l'une quelconque des revendications 3 à 8 dépendant de la revendication 2, caractérisé en ce que les moyens conducteurs (16, 116, 216) sont constitués par du noir de carbone.

10. Dispositif selon l'une quelconque des revendications précédentes, caractérisé en ce que le polymère de fluorocarbone comprend le polymère de tétrafluoroéthylène, le polymère de propylène d'éthylène fluoré, le polymère de perfluoroalkoxy, ou le polymère d' éthelyne-tétrafluoroéthylène.

11. Dispositif selon l'une quelconque des revendications précédentes, caractérisé en ce que les moyens d'accouplement (20) sont constitués par une partie d'introduction (22) destinée à s'engager dans le fourreau intérieur (12, 112, 212), et une partie d'engagement (30) partant longitudinalement de la partie d'introduction (20) pour s'engager dans un raccord.

12. Dispositif selon la revendication 11, caractérisé en ce que les moyens d'accouplement (20) comprennent un collier de verrouillage disposé autour de l'extérieur de la couche extérieure (14, 114, 214) pour pousser de force le couche intérieure (12, 112, 212) en contact avec la partie d'introduction (22), et pour empêcher tout mouvement axial relatif entre les deux.
